# EUROPEAN PATENT APPLICATION

(11) **EP 4 354 600 A2**
(43) Date of publication of application: **17.04.2024**
(21) Application number: 23199106.8
(22) Date of filing: 22.09.2023
(51) Int. Cl.: H01M 50/105, H01M 50/178, H01M 50/186, H01M 50/548, H01M 50/557, H01M 50/184

(54) **POUCH-TYPE SECONDARY BATTERY**

(30) Priority: 23.09.2022 KR 20220121205
(71) Applicant: LG Energy Solution Ltd., 07335 Seoul (KR)
(72) Inventor: KIM, Hyun Jin, 34122 Daejeon (KR); KIM, Chang Ho, 34122 Daejeon (KR); KIM, Seon Uk, 34122 Daejeon (KR); KIM, Jae Min, 34122 Daejeon (KR)
(74) Representative: Goddar, Heinz J.

(57) **Abstract**

A pouch-type secondary battery is provided. The pouch-type secondary battery comprises an electrode assembly and a pouch-type battery case. The pouch-type battery case comprises a cup part, a first sealing part and a second sealing part. The cup part is configured to accommodate the electrode assembly. The cup part extends in a length direction and in a width direction perpendicular thereto. The first sealing part is disposed at one of two sides of the cup part perpendicular to the length direction. The second sealing part is disposed at another side of the cup part perpendicular to the width direction. The electrode assembly and the pouch-type battery case are configured such that a ratio A/B is 0.29 or more, when A is an area of the first sealing part in mm², and B is a weight of the electrode assembly in g.

## Description

### CROSS-REFERENCE TO RELATED APPLICATIONS

This application claims the priority of Korean Patent Application No.10-2022-0121205 filed on September 23, 2022, in the Korean Intellectual Property Office.

### FIELD OF THE INVENTION

The present invention relates to a pouch-type secondary battery.

### DESCRIPTION OF THE RELATED ART

Secondary batteries may be provided in different configurations and dimensions. One known type is a pouch-type secondary battery, in which an electrode assembly is accommodated in a pouch-type case. Another known type may include a can-type secondary battery, in which an electrode assembly is accommodated in a can.

When compared to a can-type secondary battery, the pouch-type secondary battery may provide a higher energy density in terms of the volume and/or in terms of the weight. Yet, it may be desirable to increase the mechanical strength, particularly in terms of a mechanical resistance against external impacts and strains. More generally, it may be desirable to increase the safety of a pouch-type secondary battery.

With the ongoing diversification of the use environment of the secondary battery, it is desired to increase the durability and the safety of the secondary battery for use particularly in harsh environments. In particular, it is desirable to increase an impact resistance of the pouch-type secondary battery.

### SUMMARY OF THE INVENTION

The technical problems known from the prior art are solved by the present invention as defined by the features of the independent claims. Particular examples of the present invention are given by the features of the dependent claims. In particular, the present invention may contribute to preventing a displacement of an electrode assembly and/or a leakage of an electrolyte from a pouch-type secondary battery, even if an external impact is received.

A pouch-type secondary battery may be provided. The pouch-type batter may comprise an electrode assembly and a pouch-type battery case. The pouch-type battery case may comprise a cup part, first sealing part and a second sealing part. The cup part may be configured to accommodate the electrode assembly. The cup part may extend in a length direction and in a width direction perpendicular to the length direction. The first sealing part disposed at one of two sides of the cup part perpendicular to the length direction. The second sealing part may be disposed at another side of the cup part perpendicular to the width direction. The electrode assembly and the pouch-type battery case may be configured such that a ratio A/B is 0.29 or more, wherein A is an area of the first sealing part in square millimeters (mm²). B is a weight of the electrode assembly in gram (g). In other words, the ratio of the area of the first sealing part in mm² to the weight of the electrode assembly in g may be 0.29 or more.

In an optional example, a pouch-type secondary battery may be provided, including: an electrode assembly and a pouch-type battery case. The pouch-type battery case may include a cup part configured to accommodate the electrode assembly, a pair of first sealing parts disposed at a respective side of both sides of the cup part in a length direction, and a second sealing part configured to connect the pair of first sealing parts to each other and disposed at one side of the cup part in a width direction. When an area of the first sealing part is A mm², and a weight of the electrode assembly is B g, a ratio A/B may be about 0.29 or more.

Herein, the area of the first sealing part may refer to a surface area in terms of the mathematics in a plan view (i.e., perpendicular to the width direction and the length direction, see also detailed description below). The width direction may be parallel to the width direction, unless indicated otherwise or technically inappropriate. The length direction may be parallel to the length direction, unless indicated otherwise or technically inappropriate.

The pouch-type secondary battery as disclosed herein may contribute to increasing the durability of a pouch-type battery, particularly a pouch-type battery case thereof, against external mechanical stress, such as impact, shock, vibration, etc. Specifically, the pouch-type secondary battery as disclosed herein may contribute to preventing a breach or a rupture of the pouch-type battery case, thereby lowering the risk of a leakage of the electrolyte from the pouch-type battery case. Furthermore, the pouch-type secondary battery as disclosed herein may contribute to preventing an undesired movement (i.e., away from an intended arrangement) of the electrode assembly within and/or even out of the pouch-type battery case. Accordingly, the pouch-type secondary battery as disclosed herein may contribute to preventing a displacement of the electrode assembly. The above technical effects may be even further increased by implementing any of the optional features described in detail below.

The pouch-type secondary battery may be manufactured by applying an electrode active material to a positive electrode substrate and a negative electrode substrate to obtain a positive electrode and a negative electrode. The electrode assembly may be obtained by arranging the positive electrode and the negative electrode with a separator interposed therebetween to a stack. The electrode assembly may be arranged within a pouch-type battery case, and an electrolyte may be added thereto.

The pouch-type secondary battery case may be manufactured by performing a press processing on a flexible laminate (flexible pouch film stack) to form a cup part. After placing an electrode assembly in the cup part, and injecting an electrolyte into the electrode assembly and the cup part, a sealing part of the flexible pouch film stack may be sealed. The pouch-type secondary battery may be obtained in this manner.

In the following, the terms "pouch-type secondary battery", "pouch-type battery" and "battery" may be used interchangeably unless indicated otherwise or technically inappropriate. Also, the terms "pouch-type secondary battery case" and "battery case" may be used interchangeably unless indicated otherwise or technically inappropriate.

The electrode assembly as disclosed herein may refer to a stack of layers comprising one or more positive electrodes, one or more separators, and one or more negative electrodes in an alternating manner.

The pouch-type battery case as disclosed herein may refer to a flexible sheet or flexible laminate that is deformed such as to accommodate the electrode assembly. In particular, the pouch-type battery case may be provided as a flexible laminate that is initially planar (flat) and is deformed, for example by pressing and/or drawing, so that the cup part is formed within the flexible laminate.

The cup part as used herein may refer to a recess formed in the pouch-type battery case. The cup part may be formed as a planar protrusion in an outward direction from the initially planar flexible laminate of the pouch-type battery case. The pouch-type battery case may be substantially planar except for the cup part. In particular, the cup part may refer to a tray-shaped recess formed in the pouch-type battery case. The cup part may have a substantially planar main surface and one or more sidewalls. The main surface is offset from the rest of the initially planar flexible laminate of the pouch-type battery case. The one or more sidewalls surround the main surface of the cup part and extend from the main surface of the cup part to the rest of the pouch-type battery case. Accordingly, the rest of the pouch-type battery case may surround the cup part. The cup part may have a substantially rectangular shape in a plan view, i.e., in a viewing direction perpendicular to the main surface of the cup part, whereby the corners may be rounded by design and/or due to processing requirements. Accordingly, the cup part may have four sidewalls extending from each of the four sides of the planar main surface to the rest of the pouch-type battery case. Alternatively or additionally, the cup part may be configured, particularly shaped and dimensioned, to accommodate the electrode assembly (i.e., according to the shape and dimensions of the electrode assembly).

Herein, the electrode assembly may have a rectangular shape in the plan view. The plan view may (also) refer to a view direction perpendicular to the layers (i.e., the entirety of the electrodes and separator(s)) of the electrode assembly. In a rectangular shape, two opposite sides are of equal length and parallel to each other. Herein, the length direction may refer to a direction that is parallel to the longer sides of the sides of the rectangular shape of the electrode assembly, and the width direction may refer to a direction that is parallel to the shorter sides of the same. Hence, the length direction, the width direction, and the viewing direction of the plan view may be perpendicular to one another.

Additionally or alternatively, the cup part accommodating the electrode assembly may have a respective rectangular shape in the plan view. The plan view may refer to a view direction perpendicular to the planar main surface of the cup part as described above. The length direction may refer to a direction that is parallel to the longer sides of the sides of the rectangular shape of the cup part, and the width direction may refer to a direction that is parallel to the shorter sides of the same. The length direction, the width direction and the viewing direction of the plan view may be perpendicular to one another.

Generally, any of the first sealing part, the second sealing part and the additional first sealing part as used herein may refer to an area of the pouch-type battery case that is used to close the pouch-type battery case in a fluid-tight manner. In particular, the pouch-type battery case may be foldable so that one half of the pouch-type battery case lies on another half of the same. The halves of the pouch-type battery case may be fused together at any of the first sealing part, the second sealing part and the additional first sealing part under heat and/or pressure to close the pouch-type battery case, particularly the cup part thereof, in a fluid-tight manner.

The first sealing part of the cup part may be disposed at one of the two sides of the cup part which extend perpendicular to the length direction. In other words, the first sealing part of the cup part may be disposed at one of the two shorter sides of the cup part. As such, the first sealing part may be disposed at one side of the cup part which extends parallel to the width direction. The shorter sides may refer to the sides of the rectangular-shaped cup part extending in (i.e., substantially parallel to) the width direction. The first sealing part may have an elongated shape in the plan view. In particular, the first sealing part may be divided in multiple sections elongated in different directions. In specific examples, the first sealing part may have a stripe-like, or tape-like shape in the plan view, whereby a width (that is measured perpendicular to a longitudinal direction of the first sealing part) may be constant or may change along the longitudinal direction of the first sealing part.

As will be discussed below, the pouch-type battery case may comprise an additional first sealing part. The first sealing part is disposed at one of the shorter sides of the cup part, and the additional first sealing part may be disposed on the opposite side thereto.

The second sealing part of the cup part may be disposed at one of the two sides of the cup part which extend perpendicular to the width direction. In other words, the second sealing part of the cup part may be disposed at one of the two longer sides of the cup part. As such, the second sealing part may be disposed at one side of the cup part which extends parallel to the length direction. The longer sides may refer to the sides of the rectangular-shaped cup part extending in (i.e., substantially parallel to) the length direction. The second sealing part may have an elongated shape in the plan view. In particular, the second sealing part may be divided in multiple sections elongated in different directions. In specific examples, the second sealing part may have a stripe-like, or tape-like shape in the plan view, whereby a width (that is measured perpendicular to a longitudinal direction of the second sealing part) may be constant or may change along the longitudinal direction of the second sealing part.

The pouch-type secondary battery, in particular the first sealing part and the electrode assembly in relation to each other, may be provided such that the ratio of the area of the first sealing part in mm² to the weight of the electrode assembly in g is 0.29 or more. This specific condition may contribute to the above-indicated effect of increasing the durability of the pouch-type battery, particularly by preventing rupture or breach of the pouch-type battery case.

The ratio of the area of the first sealing part in mm² to the weight of the electrode assembly in g may be about 0.37 or less. The ratio A/B may be 0.29 to 0.37. The particular range of said ratio may contribute to the effect of increasing the durability of the pouch-type secondary battery. In some examples, the ratio of the area of the first sealing part in mm² to the weight of the electrode assembly in g may be 0.29 to 0.35, or 0.29 to 0.33, or 0.29 to 0.32, wherein the above-indicated effect may be stronger in that order.

The pouch-type battery case may further comprise an additional first sealing part. The additional first sealing part may be disposed at the other one of the two sides of the cup part perpendicular to the length direction. The electrode assembly and the pouch-type battery case are configured such that a ratio C/B is 0.29 or more, when C is an area of the additional first sealing part in mm², and B is the weight of the electrode assembly in g. In other words, the pouch-type battery may be provided such that a ratio of the area of the additional first sealing part in mm² to the weight of the electrode assembly in g is 0.29 or more.

As mentioned above, first sealing part may be disposed at one of the shorter sides of the cup part, and the additional first sealing part may be disposed on the opposite side thereto. The specific condition that applies to the first sealing part may also be applied to the additional first sealing part, so that the above-indicated technical effect may be achieved at the additional first sealing part as well. In particular, the first sealing part may have a portion through which an electrode lead from the electrode assembly passes from the cup portion to the outside of the pouch-type battery case. Any, some or all of the features and specifications of the first sealing part disclosed herein may also apply to the additional first sealing part, unless indicated otherwise or technically inappropriate.

The pouch-type battery case may further include a gas pocket part disposed between the cup part and the first sealing part. The gas pocket part may be configured to contain a gas discharged from the electrode assembly.

A gas may be generated due to the chemical reactions that may occur during the manufacturing or the operation of the battery. Herein, the term "gas" used in this regard encompasses in a collective manner any gas or gas mixture that may be generated in the battery. The gas pocket part may provide an area or a volume between the cup part and the first sealing part to store the gas generated in the battery, temporarily or (semi-) permanently. The inclusion of the gas in the gas pocket part, i.e., in a gas-tight manner, may be ensured at least partly by the fluid-tight sealing provided by the first sealing part. The gas pocket part may contribute to suppress a pressure increase inside the battery.

Additionally or alternatively, an additional gas pocket part may be provided between the cup part and the additional first sealing part. The additional gas pocket part may be configured to contain the gas discharged from the electrode assembly. The additional gas pocket part may implement any, some or all of the features of the gas pocket part disclosed herein. In particular, the inclusion of any gas in the additional gas pocket part may be ensured at least partly by a fluid-tight sealing provided by the additional first sealing part.

The gas pocket part may have a shape tapering in the length direction outwardly from the electrode assembly. The gas pocket part may have a polygonal basic shape, for example a trapezoidal basic shape, in the plan view, whereby one or more sides may be linear or curved. In particular, the gas pocket part may have a base side adjacent to the cup part and may be shaped so as to taper outwardly to a section of the first sealing part through which an electrode lead passes from the electrode assembly accommodated in the cup part to the outside of the pouch-type battery case. In particular, the shape of the gas pocket part may be determined by the shape of the first sealing part in the plan view.

The first sealing part may at least partially extend in a direction that is not parallel to the width direction. As described above, the first sealing part may have an elongated shape along a longitudinal direction. The longitudinal direction may change along the first sealing part. The first sealing part may have one or more sections in which the longitudinal direction is parallel to the width direction. The first sealing part may have one or more other sections in which the longitudinal direction is not parallel to the width direction.

The first sealing part may have a stripe shape extending along one or more arcs, one or more curves, one or more lines and/or a combination of any of the foregoing. As described above, the first sealing part may have an elongated shape, and the stripe shape may be one example thereof. Here, it is noted that the width of the first sealing part measured perpendicular to the longitudinal direction may be constant or may vary along the first sealing part. The same may apply to the additional first sealing part accordingly.

The battery may further comprise an electrode lead that is electrically connected to the electrode assembly. The electrode lead may protrude from the pouch-type battery case through a section of the first sealing part. The electrode lead may be in line with the above description. In particular, the electrode assembly may have an (electrode) tab protruding from a stack of electrodes and separator(s), and the electrode lead may be physically (i.e., directly) and/or electrically connected to the tab. The battery may further comprise an insulating tape that insulates between the electrode lead and the pouch-type battery case. The section of the first sealing part, through which the electrode lead protrudes, may be linear or curved.

A ratio of a smallest distance between the first sealing part and the electrode assembly in the length direction to a length of the electrode assembly (i.e., dimension of the electrode assembly in the length direction) may be between 0.005 and 0.008. In other words, a minimum distance between the first sealing part and the electrode assembly in the length direction of the cup part may range of about 0.5% to about 0.8% compared to a length of the electrode assembly. This may provide a volume for buffering a gas generated in the electrode assembly as described above with respect to the gas pocket part.

The pouch-type battery case may further comprise a first case part, a second case part and a folding part. The first case part and the second case part may be each configured to accommodate the electrode assembly on and from opposite sides thereof. The folding part may be formed between the first case part and the second case part, and extend linearly along the length direction. The pouch-type battery case may be foldable around the folding part to enclose the electrode assembly between the first case part and the second case part. The first sealing part may extend from the folding part in a direction that is not parallel to the width direction.

In addition, the additional first sealing part may extend from the folding part in a direction that is not parallel to the width direction. The second sealing part may extend from the first sealing part to the additional first sealing part. In particular, the second sealing part may be physically connected to both the first sealing part and the additional first sealing part and thus connect and extend between them. The second sealing part may extend from an end of the first sealing part that is distal to the folding part. The second sealing part may be formed at a side of the pouch-type battery case opposite to the folding part.

In the length direction, a smallest distance between the first sealing part and the electrode assembly at the second sealing part may be smaller than a smallest distance between the first sealing part and the electrode assembly at the folding part. With the folding part being a continuous part while the first sealing part and the second sealing part are fused parts, the sealing strength is higher at the folding part than at the first sealing part and the second sealing part. It has been found that having a smaller gap between the first sealing part and the electrode assembly near the second sealing part than near the folding part increases the overall sealing strength of the pouch-type battery case.

The first sealing part may further comprise a first section, a second section and a third section. The first section may extend from the second sealing part. The electrode lead may protrude through the second section from the pouch-type battery case. The third section may extend from the second section to the folding portion. The second section may connect between the first section and the third section. A length of the first section may be greater than a length of the third section. The inventors found that such a configuration further increases the sealing strength of the pouch-type battery case, thereby increasing the durability of the pouch-type battery as a whole.

Alternatively, the first sealing part may include: a first section which is connected to the second sealing part and in which a distance from the cup part in the length direction of the cup part increases as being away from the second sealing part; and a second section which is connected to the first section and from which an electrode lead connected to the electrode assembly protrudes.

A minimum distance between the first section and the electrode assembly in the length direction of the cup part may range of about 0.5% to about 0.8% of a length of the electrode assembly.

Optionally, the pouch-type battery case may include a folding part disposed at an opposite side of the second sealing part with respect to the cup part to connect the pair of first sealing parts to each other. Each of the first sealing parts may further include a third section which is configured to connect the second section to the folding part and in which a distance from the cup part in the length direction of the cup part increases as being away from the folding part.

A minimum distance between the first section and the electrode assembly in the length direction of the cup part maybe less than a minimum distance between the third section and the electrode assembly.

The first section may have a length greater than that of the third section.

According to a further aspect, a pouch-type secondary battery may be provided. The pouch-type secondary battery may comprise an electrode assembly and a pouch-type battery case. The pouch-type battery case may comprise a cup part, a pair of first sealing parts and a second sealing part. The cup part may be configured to accommodate the electrode assembly. The cup part may extend in a length direction and in a width direction perpendicular thereto. The pair of first sealing parts may be each disposed at a respective one of two sides of the cup part perpendicular to the length direction. The second sealing part may be disposed at a side of the cup part perpendicular to the width direction, wherein the second sealing part bridges between the pair of first sealing parts. A minimum distance between the first sealing part and the electrode assembly in the length direction of the cup part is about 0.5% or more compared to a length of the electrode assembly.

Any of the pouch-type battery case, the cup part and the second sealing part may be as described above, and may implement any, some or all of the respective features as disclosed herein. The pair of first sealing parts may with respect to correspond to the first sealing part and the additional sealing part as described above, and may implement any, some or all of the respective features as disclosed herein.

In particular examples, a smallest distance between the first sealing part and the electrode assembly in the length direction is about 0.8% or less of a length of the electrode assembly.

In particular examples, when an area of the first sealing part is A mm², and a weight of the electrode assembly is B g, a ratio A/B may range between 0.29 and 0.37.

According to another aspect, there is provided a pouch-type secondary battery including: an electrode assembly; and a pouch-type battery case. The pouch-type battery case may include a cup part configured to accommodate the electrode assembly, a pair of first sealing parts disposed at both sides of the cup part in a length direction, respectively, and a second sealing part configured to connect the pair of first sealing parts to each other and disposed at one side of the cup part in a width direction. A minimum distance between the first sealing part and the electrode assembly in the length direction of the cup part may be about 0.5%or more compared to a length of the electrode assembly.

The minimum distance between the first sealing part and the electrode assembly in the length direction of the cup part may be about 0.8% or less compared to a length of the electrode assembly.

When an area of the first sealing part is A mm², and a weight of the electrode assembly is B g, a ratio A/B may range of about 0.29 to about 0.37.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is an exploded view of a pouch-type secondary battery according to an example;
FIG. 2 is a plan view of the pouch-type secondary battery according to an example; and
FIG. 3 is a partial enlarged plan view of a pouch-type secondary battery according to another example.

### DETAILED DESCRIPTION OF THE PREFERRED EMBODIMENT

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

For the sake of conciseness and to avoid redundancy, references are made to the features that have already been described above without repeating them in the following. It is noted that generally any of the above-described features may be implemented also in the examples as described hereinafter with reference to the drawings, unless indicated otherwise or technically inappropriate. In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

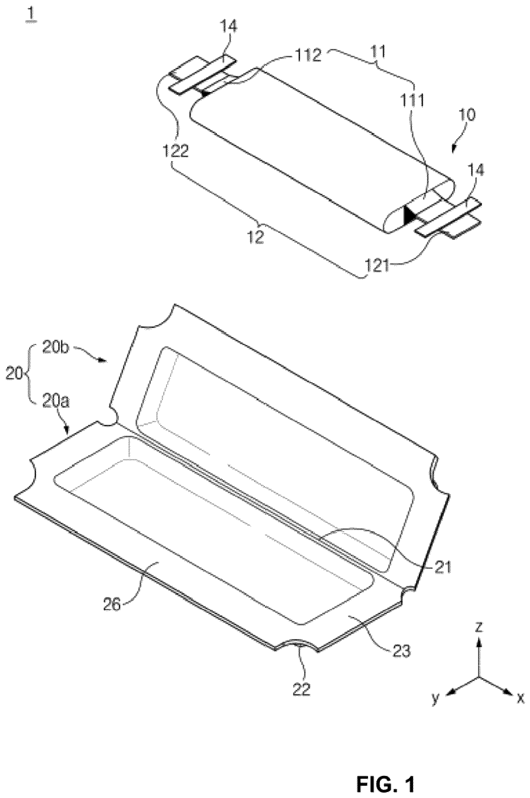

FIG. 1 is an exploded view of a pouch-type secondary battery.

A pouch-type secondary battery 1 may include an electrode assembly 10 and a pouch-type battery case 20 (hereinafter, referred to as a 'battery case'). In particular, the pouch-type secondary battery 1 may implement any, some or all of the features of the pouch-type secondary battery as described above, unless indicated otherwise or technically inappropriate.

The electrode assembly 10 may be provided by alternately stacking a positive electrode and a negative electrode with a separator therebetween. That is, the electrode assembly 10 may include a plurality of electrodes and a separator disposed between the plurality of electrodes to insulate the plurality of electrodes from each other. The electrode assembly 10 may be accommodated together with an electrolyte in the battery case 20, more specifically, a cup part 22 as described in detail later. The electrode assembly 10, the pouch-type battery case 20 and the cup part 22 may each implement any, some or all of the respective features as described above, unless indicated otherwise or technically inappropriate.

The electrode assembly 10 includes a stack type, a jelly-roll type, a stack and folding type, and the like, but is not limited thereto.

The electrode assembly 10 may include an electrode tab 11. The electrode tab 11 may be connected to each of the positive electrode and the negative electrode of the electrode assembly 10 to protrude outward from the electrode assembly 10, thereby serving as a path, through which electrons move, between the inside and outside of the electrode assembly 10.

The electrode tab 11 may be provided by cutting a non-coating portion or by connecting a separate conductive member to the non-coating portion through ultrasonic welding.

The plurality of electrode tab 11 may include a positive electrode tab 111 connected to the positive electrode and a negative electrode tab 112 connected to the negative electrode. Although the electrode tabs 111 protrude in different directions of the electrode assembly 10, respectively, the embodiment of the present invention is not limited thereto. For example, the electrode tabs may protrude in various directions, for example, protrude in parallel to each other from one side in the same direction.

An electrode lead 12 that supplies electricity to the outside of the secondary battery 1 may be connected to the electrode tab 11 of the electrode assembly 10 through spot welding or the like. In addition, a portion of the electrode lead 12 may be surrounded by an insulating part 14. The insulating part 14 may be disposed to be confined to terrace parts 23 and 26 to which the first case 20a and the second case 20b of the battery case 20 are thermally fused. Therefore, the insulating part 14 may insulate the electrode lead 12 from the battery case 20 and maintain the sealing of the battery case 20. In general, although an insulation tape which is easily attached to the electrode lead 12 and has a relatively thin thickness is mainly used as the insulating part 14, the present invention is not limited thereto. For example, various members maybe used as the insulating part 14 as long as the members are capable of insulating the electrode lead 12. The electrode lead 12 may implement any, some or all of the features of the electrode lead as described above, unless indicated otherwise or technically inappropriate.

The electrode lead 12 may have one end connected to the electrode tab 11 and the other end protruding to the outside of the battery case 13. The electrode lead 12 may include a positive electrode lead 121 connected to the positive electrode tab 111 and a negative electrode lead connected to the negative electrode tab 112.

The electrode lead 12 may electrically connect the electrode assembly 10 to the outside. Also, since each of the positive electrode tab 111 and the negative electrode tab 112 is formed to protrude in various directions, each of the positive electrode lead 121 and the negative electrode lead 122 may extend in various directions.

The battery case 20 may accommodate the electrode assembly 10 therein and may be formed by molding a laminate sheet. In more detail, when the laminate sheet having flexibility is drawn and molded using a die and a punch, a portion of the battery case 20 may be stretched to form a cup part 22 having a pocket-shaped accommodation space, thereby manufacturing the battery case 20.

The battery case 20 may accommodate the electrode assembly 10 so that a portion of the electrode lead 12 is exposed and then may be sealed. The battery case 20 may include a pair of cases 20a and 20a, more specifically, a first case 20a and a second case 20b.

The first case 20a and the second case 20b may be connected to each other by a folding part 21. However, it is not limited thereto, and it is also possible that the first case 20a and the second case 20b are separated from each other and manufactured separately. The folding part 21 may implement any, some or all of the features of the folding part as described above, unless indicated otherwise or technically inappropriate.

The cup part 22 may be provided in at least one of the pair of cases 20a and 20b to provide an accommodation space capable of accommodating the electrode assembly 10. The cup part 22 may have a recessed shape.

Hereinafter, a case in which the cup part 22 is provided in each of the cases 20a and 20b will be described as an example. Those skilled in the art will also be able to easily understand the case in which the cup part 22 is provided only in one of the pair of cases 20a and 20b.

The cup parts 22 of the pair of cases 20a and 20b may be disposed to face each other and may accommodate the electrode assembly 10. In this case, when compared to the case in which the cup part 22 is provided only in one of the pair of cases 20a and 20b, the battery case 20 may accommodate the electrode assembly 10 having a increased thickness and a larger capacity.

The first case 20a and the second case 20b may be connected to each other by the folding part 21. When the cup part 22 is provided in each of the cases 20a and 20b, a portion of the folding part 21 may be between the cup part 22 of the first case 20a and the cup part 22 of the second case 20b, and the other portion of the folding part 21 may be disposed between a first terrace part 23 of the first case 20a and a first terrace part 23 of the second case 20b. The first terrace part 23 will be described later.

The folding part 21 may extend parallel to a length direction (e.g., a direction parallel to an X axis) of the electrode assembly 10. When the folding part 21 is folded, the first case 20a and the second case 20b may face each other.

The cases 20a and 20b may include the terrace parts 23 and 26 disposed around the cup part 22, respectively. In more detail, the terrace parts 23 and 26 may include a pair of first terrace parts 23 disposed at both sides of the cup part 22 in a longitudinal direction (e.g., the direction parallel to the X axis), and a second terrace part 23 connecting the pair of first terrace parts 23 to each other and disposed at one side of the cup part 22 in a width direction (e.g., a direction parallel to a Y axis).

The second terrace part 26 may be disposed at an opposite side of the folding part 21 with respect to the cup part 22. If the first case 20a and the second case 20b are separate members that are not connected to each other by the folding part 21, the second terrace part 26 may be disposed at both sides of the cup part 22 in the width direction.

When the folding part 21 is folded, the terrace parts 23 and 26 of the first case 20a and the second case 20b may be in contact with each other. Here, the insulating part 14 of the electrode assembly 10 may be disposed between the terrace parts 23 and 26 of the pair of cases 20a and 20b. For example, the insulating part 14 may be disposed between the first terrace parts 23 of the pair of cases 20a and 20b.

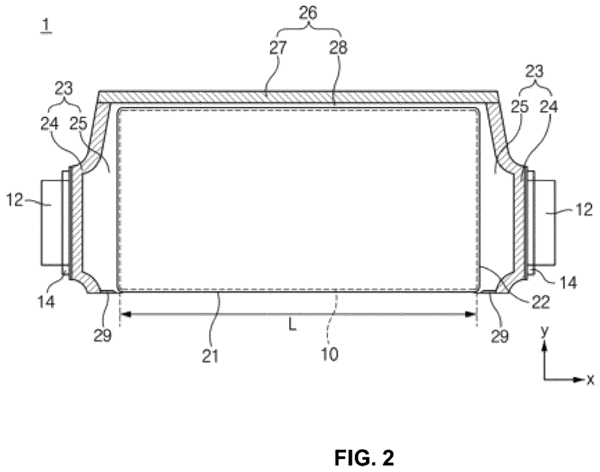

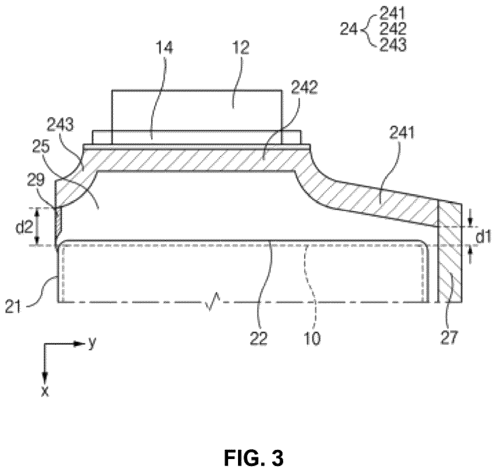

FIG. 2 is a plan view of the pouch-type secondary battery. FIG. 3 is a partial enlarged plan view of a pouch-type secondary battery. The examples shown in FIG. 2 and FIG. 3 may implement any, some or all of the features as described above, unless indicated otherwise or technically inappropriate.

The battery case 20 may include a pair of first sealing parts 24 disposed at both sides of the cup part 22 in the length direction and a second sealing part 27 connecting the pair of first sealing parts 24 to each other and disposed at one side of the cup part in the width direction. One of the pair of first sealing parts 24 may be implemented as the first sealing part as described above, and the other one of the pair of first sealing parts 24 may be implemented as the additional sealing part as described above. As such, the first sealing parts 24 may each implement any, some or all of the respective features as described above, unless indicated otherwise or technically inappropriate. Also the second sealing part 27 may implement any, some or all of the features of the second sealing part as described above, unless indicated otherwise or technically inappropriate.

The sealing parts 24 and 27 may be portions that are sealed to each other in a state in which the first case 20a and the second case 20b are in contact with each other. In more detail, the first sealing part 24 may be provided by sealing partial outer portions of the first terrace parts 23 of the pair of cases 20a and 20b to each other. Similarly, the second sealing part 27 may be provided by sealing partial outer portions of the second terrace parts 26 of the pair of cases 20a and 20b to each other.

Each first sealing part 24 may connect the folding part 21 to the second sealing part 27. Thus, the battery case 20 may be sealed by the pair of first sealing parts 24 and second sealing parts 27.

A width of each of the first sealing part 24 and the second sealing part 27 may be substantially constant, but is not limited thereto.

The first sealing part 24 may include a first section 241 and a second section 242. The first sealing part 24 may further include a third section 243. The first, second and third sections 241,242,243 of the firsts sealing part may implement any, some or all of the respective features as described above, unless indicated otherwise or technically inappropriate.

The first section 241 may be connected to the second sealing part 27. A distance between the first section 241 and the cup part 22 may increase in the length direction of the cup part 22 as being away from the second sealing part 27. That is, the first section 241 may extend in an oblique or curved direction with respect to the width direction of the cup part 22.

The second section 242 may be connected to the first section 241. In the second section 242, the electrode lead 12 may protrude. In more detail, an insulating part 14 that insulates the electrode lead 12 may be disposed between the second sections 242 of the first sealing parts 24 of the pair of cases 20a and 20b. An interval between the second section 242 and the cup part 22 may be maintained constantly. That is, the second section 242 may extend parallel to the width direction of the cup part 22.

The third section 243 may connect the second section 242 to the folding part 21. As the third section 243 is farther away from the folding part 21, a distance from the third section 243 and the cup part 22 in the entire length direction of the cup part 22 may increase. That is, the third section 243 may extend in an oblique or curved direction with respect to the width direction of the cup part 22.

A length of the first section 241 may be greater than that of the third section 243. A length of the second section 242 may be greater than that of the third section 243.

In the length direction of the cup part 22, a minimum distance d1 between the first section 241 and the electrode assembly 10 may be less than a minimum distance d2 between the third section 243 and the electrode assembly 10.

Due to the configuration of the first sealing part 24, a space in the battery module in which a plurality of pouch-type secondary batteries 1 are accommodated may be efficiently utilized.

The second sealing part 27 may be folded at least once toward the cup part 21. For example, the second sealing part 27 may be double side folded (DSF). As a result, an energy density of the pouch-type secondary battery 1 may increase.

The battery case 20 may further include a gas pocket part 25 disposed between the cup part 22 and the first sealing part 24.

The gas pocket part 25 may be inner portions that are not sealed to each other on the first terrace parts 23 of the pair of cases 20a and 20b. Since the inside of the gas pocket part 25 communicates with the accommodation space of the cup part 22, a gas generated in the electrode assembly 10 may be accommodated in the gas pocket part 25 as well as the cup part 22. The gas pocket part 25 may implement any, some or all of the features of the gas pocket part as described above, unless indicated otherwise or technically inappropriate.

The battery case 20 may further include a non-sealed part 28 disposed between the cup part 22 and the second sealing part 27.

The non-sealed part 28 may be inner parts that are not sealed to each other on the second terrace parts 26 of the pair of cases 20a and 20b. Due to the non-sealed part 28, it is possible to prevent a high-temperature sealing tool for forming the second sealing part 27 from being too close to the cup part 22 to affect the electrode assembly 10.

The non-sealed part 28 may be connected to the gas pocket part 25. A gas generated in the electrode assembly 10 may also be accommodated in the non-sealed part 28, but since a width of the non-sealed part 28 is very narrow compared to the gas pocket part 25, an actual gas accommodating function may be insufficient.

The battery case 20 may further include a sub-sealing part 29 connected to the first sealing part 24 and provided by sealing a partial outer portion of the folding part 21. In more detail, the sub-sealing part 29 may be provided by sealing a portion of the folding part 21, which is disposed between the first terrace parts 23 of the pair of cases 20a and 20b. The sub-sealing part 29 may extend approximately parallel to the length direction of the cup part 22. The sub-sealing part 29 may have a predetermined interval with respect to the cup part 22.

Overall sealing strength of the battery case 20 may be further improved by the sub-sealing part 29.

As the demand for high-capacity batteries such as batteries for electric vehicles increases recently, rated capacity of pouch-type secondary batteries is increasing, and thus, a size and weight of the electrode assembly tend to increase. However, as the size and weight of the electrode assembly increase, when an external impact is applied, a phenomenon, in which the pouch-type battery case is damaged, or the electrode assembly penetrates the pouch-type battery case while the electrode assembly moves, is intensifying. If the pouch-type battery case is damaged, an electrolyte may leak, or the electrode assembly may be deformed to cause serious limitations in battery performance and safety.

To solve the limitation, in which the electrode assembly 10 is deviated from its original position to damage or penetrate the battery case 20, in the pouch-type secondary battery 1 according to an embodiment of the present invention, a ratio of an area of the first sealing part 24 to a weight of the electrode assembly 10 may satisfy a specific condition.

In more detail, in the pouch-type secondary battery 1 according to an embodiment of the present invention, when the area of the first sealing part 24 is A mm², and the weight of the electrode assembly 10 is B g, a ratio A/B may be greater than or equal to about 0.29. That is, the area (mm2) of each first sealing part 24 may be greater about 0.29 times than the weight g of the electrode assembly 10.

Since inertia increases as the weight of the electrode assembly 10 increases, there is a high risk of damaging the battery case 20 by the electrode assembly 10 when the external impact is applied.

In addition, although the force varies depending on a direction in which the external impact is applied, since each first sealing part 24 has a length less than that of the second sealing part 27, when the external impact is applied, stress which is applied from the electrode assembly 10 to the first sealing part 24 may be greater than stress which is applied to the second sealing part 27. As a result, the risk of damage or penetration of the first sealing part 24 is greater than that of the second sealing part 27.

Therefore, to improve impact resistance, the area of the first sealing part 24 has to increase as the electrode assembly 10 is heavier.

If the area (mm²) of the first sealing part 24 is less about 0.29 times than the weight g of the electrode assembly 10, when an external impact is applied to the pouch-type secondary battery 1, there is a risk of damaging the battery case 20 by the electrode assembly 10 or allow the electrode assembly 10 to penetrate the battery case 20.

In addition, to prevent the area of the first sealing part 24 from being excessively widened to decrease in energy density of the pouch-type secondary battery 1, the area (mm²) of the first sealing part 24 may be less about 0.37 times than the weight g of the electrode assembly 10. That is, the ratio A/B may range of about 0.29 to about 0.37.

If the area (mm²) of the first sealing part 24 is greater about 0.37 times than the weight g of the electrode assembly 10, since the area of the first sealing part 24 is unnecessarily widened, the energy density of the pouch-type secondary battery may be too low. In addition, since the size of the pouch-type secondary battery 1 increases, it may be difficult to secure a space within the battery module accommodating the plurality of pouch-type secondary batteries 1.

Hereinafter, a pouch-type secondary battery 1 according to another embodiment of the present invention will be described with reference to FIGS. 1 to 3, and contents duplicated with those described above will be cited.

In the pouch-type secondary battery 1 according to another embodiment of the present invention, to solve a limitation that a battery case 20 is damaged or penetrated when an electrode assembly 10 is deviated from its original position due to an external impact, a ratio of a minimum distance d1 between a first sealing part 24 and the electrode assembly 10 in a length direction of a cup part 22 to a length L of the electrode assembly 10 may satisfy a specific condition.

In more detail, in the pouch-type secondary battery 1 according to another embodiment of the present invention, the minimum distance d1 (hereinafter, referred to as a clearance distance) between the first sealing part 24 and the electrode assembly 10 in the length direction of the cup part 22 may be about 0.5% or more compared to the length L of the electrode assembly 10.

As described above, since the minimum distance d1 between a first section 241 and the electrode assembly 10 in the length direction of the cup part 22 is less than a minimum distance d2 between a third section 243 and the electrode assembly 10, the clearance distance d1 may mean that a minimum distance between the first section 241 of the first sealing part 24 and the electrode assembly 10.

Since a size of the electrode assembly 10 increases as the length L of the electrode assembly 10 increases, there is a high risk of damaging a battery case 20 by the electrode assembly 10 when an external impact is applied.

In addition, since the clearance distance d1 is a distance by which the electrode assembly is deviated from its original position to reach the first sealing part, as the clearance distance increases, the risk of damaging penetrating the first sealing part by the electrode assembly may decrease.

Therefore, to realize excellent impact resistance, the clearance distance d1 has to increase as the length L of the electrode assembly to increases.

If the clearance distance d1 is less than about 0.5% of a total length L of the electrode assembly 10, when an external impact is applied to the pouch-type secondary battery 1, the electrode assembly 10 may damage the battery case 20 or penetrate the battery case 20.

In addition, to prevent the energy density of the pouch-type secondary battery 1 from being lowered due to an excessive increase in clearance distance d1, the clearance distance d1 may be about 0.8% or less of the total length L of the electrode assembly 10. That is, the clearance distance d1 may be about 0.5% to about 0.8% of the total length L of the electrode assembly 10.

If the clearance distance d1 is greater than about 0.8% of the total length L of the electrode assembly 10, a length of the electrode assembly 10 may be too short, or a length of the battery case 20 is too long, and thus, the energy density of the pouch type secondary battery 1 may be too low. In addition, since the size of the pouch-type secondary battery 1 increases, it may be difficult to secure a space within the battery module accommodating the plurality of pouch-type secondary batteries 1.

The ratio condition of the area of the first sealing part to the weight of the electrode assembly 10 according to an embodiment of the present invention and a ratio condition of the ratio condition of the clearance distance d and the length L of the electrode assembly 10 according to another embodiment of the present invention may not be alternative, and the pouch-type secondary battery 1 may satisfy both the conditions.

According to the preferred embodiment of the present invention, the ratio of the area of the first sealing part of the battery case to the weight of the electrode assembly may satisfy the specific condition, or the ratio of the minimum distance between the first sealing part and the electrode assembly to a length of the electrode assembly may satisfy the specific condition, or both the specific conditions may be satisfied. Thus, when the external impact is applied, the risk of damage or penetration of the first sealing part due to the electrode assembly may be reduced, and the separation of the electrode assembly and/or the leakage of the electrolyte may be suppressed to realize the excellent impact resistance.

In addition, the effects that are obvious to those skilled in the art may be predicted from the configurations according to the embodiment of the present invention.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims, and all differences within the scope will be construed as being included in the present disclosure.

## Claims

1. A pouch-type secondary battery comprising:
an electrode assembly; and
a pouch-type battery case,
wherein the pouch-type battery case comprises:
a cup part configured to accommodate the electrode assembly, the cup part extending in a length direction and in a width direction perpendicular thereto;
a first sealing part disposed at one of two sides of the cup part perpendicular to the length direction; and
a second sealing part disposed at another side of the cup part perpendicular to the width direction,
wherein the electrode assembly and the pouch-type battery case are configured such that a ratio A/B is 0.29 or more, when A is an area of the first sealing part in mm², and B is a weight of the electrode assembly in g.

2. The pouch-type secondary battery of claim 1, wherein the ratio A/B is 0.37 or less.

3. The pouch-type secondary battery of claim 1 or 2, wherein the pouch-type battery case further comprises:
an additional first sealing part disposed at the other one of the two sides of the cup part perpendicular to the length direction,
wherein the electrode assembly and the pouch-type battery case are configured such that a ratio C/B is 0.29 or more, when C is an area of the additional first sealing part in mm², and B is the weight of the electrode assembly in g.

4. The pouch-type secondary battery of any of the preceding claims,
wherein the pouch-type battery case further comprises a gas pocket part disposed between the cup part and the first sealing part, wherein the gas pocket part is configured to contain a gas discharged from the electrode assembly.

5. The pouch-type secondary battery of claim 4,
wherein the gas pocket part has a shape tapering in the length direction outwardly from the electrode assembly.

6. The pouch-type secondary battery of any of the preceding claims,
wherein the first sealing part at least partially extends in a direction that is not parallel to the width direction.

7. The pouch-type secondary battery of any of the preceding claims,
wherein the first sealing part has a stripe shape extending along one or more arcs, one or more curves, one or more lines and/or a combination of any of the foregoing.

8. The pouch-type secondary battery of any of the preceding claims, further comprising:
an electrode lead electrically connected to the electrode assembly, wherein the electrode lead protrudes from the pouch-type battery case through a section of the first sealing part.

9. The pouch-type secondary battery of any of the preceding claims,
wherein a ratio of a smallest distance between the first sealing part and the electrode assembly in the length direction to a length of the electrode assembly ranges between 0.005 and 0.008.

10. The pouch-type secondary battery of any of the preceding claims,
wherein the pouch-type battery case further comprises:
a first case part and a second case part each to accommodate the electrode assembly on and from opposite sides thereof;
a folding part formed between the first case part and the second case part, the folding part extending linearly along the length direction,
wherein the pouch-type battery case is foldable around the folding part to enclose the electrode assembly between the first case part and the second case part,
wherein the first sealing part extends from the folding part in a direction that is not parallel to the width direction.

11. The pouch-type secondary battery of claim 10,
wherein, in the length direction, a smallest distance between the first sealing part and the electrode assembly at the second sealing partis smaller than a smallest distance between the first sealing part and the electrode assembly at the folding part.

12. The pouch-type secondary battery of claim 10 or 11, wherein the first sealing part comprises:
a first section extending from the second sealing part;
a second section through which an electrode lead protrudes from the pouch-type battery case;
a third section extending from the second section to the folding portion,
wherein the second section connects between the first section and the third section,
wherein a length of the first section is greater than a length of the third section.

13. A pouch-type secondary battery comprising:
an electrode assembly; and
a pouch-type battery case,
wherein the pouch-type battery case comprises:
a cup part configured to accommodate the electrode assembly, the cup part extending in a length direction and in a width direction perpendicular thereto;
a pair of first sealing parts each disposed at a respective one of two sides of the cup part perpendicular to the length direction; and
a second sealing part disposed at a side of the cup part perpendicular to the width direction, wherein the second sealing part bridges between the pair of first sealing parts,
wherein a minimum distance between the first sealing part and the electrode assembly in the length direction of the cup part is about 0.5% or more compared to a length of the electrode assembly.

14. The pouch-type secondary battery of claim 13, wherein a smallest distance between the first sealing part and the electrode assembly in the length direction is about 0.8% or less of a length of the electrode assembly.

15. The pouch-type secondary battery of claim 13 or 14, wherein, when an area of the first sealing part is A mm², and a weight of the electrode assembly is B g, a ratio A/B ranges between 0.29 and 0.37.
